# EUROPEAN PATENT APPLICATION

(11) **EP 1 865 612 A2**
(43) Date of publication of application: **12.12.2007**
(21) Application number: 07425341.0
(22) Date of filing: 04.06.2007
(51) Int. Cl.: H04B 1/38, H01Q 1/12

(54) **Helitransportable self-powered unit for telecommunications**

(30) Priority: 05.06.2006 IT RM20060294
(71) Applicant: La Neve S.r.l., 00144 Roma (IT)
(72) Inventor: Manucci, Alessandro, 00144 Roma (IT); Manucci, Alfonso, 00144 Roma (IT)

(57) **Abstract**

A helitransportable self-powered unit for telecommunications according to the invention carries out, among its most important applications, that one of creating an emergency radio relay system, for example for temporary cellular telephone coverages. Therefore, the unit comprises a telescoping mast (2) for antennas, which is provided with a hooking bottom (23) and a locking sleeve (24) to allow the telescoping mast (2) to be installed on a container or cabinet of the unit. The hooking bottom (23) is attached to a lower end of the telescoping mast (2), has a front projection (27) provided with hook members (28) facing downward, and is provided rear with a handle (25). Also the locking sleeve (24) being fastened to the telescoping mast (2) is provided rear with a handle (26). Further, a supporting block (37) serves to fit tubular brackets able to support arms holding the photovoltaic panels.

## Description

The present invention relates to a helitransportable self-powered unit for telecommunications. Although the unit according to this invention is able to carry out various tasks, one of its most important applications can be considered to create an emergency radio relay system, for example for temporary cellular telephone coverages.

The Applicant is the owner of two national patents that have to be believed the closest prior art: Italian patent N. 1292220 granted on 28 January 1999 relevant to a transportable emergency relay station, and Italian patent N. 1307726 granted on 14 November 2001 concerning a support frame for photovoltaic panels.

Italian patent N. 1292220 essentially discloses an insulated-core self-powered module equipped with a control unit. The module as described in the cited patent is small in its dimensions and very easily transportable. The module is provided on a rear wall thereof with a folding base for supporting a telescoping mast whose installation further needs a coupling for compressed-air feeding. It is found that, at least theoretically, in time, repeated stresses on the folding base could endanger a matching of male and female parts in the coupling, that are located in the telescoping mast and on the rear wall of the module, respectively, with a result of less reliability of the module operation.

Italian patent N. 1307726 discloses a H-shaped construction adapted to support the photovoltaic panels and designed to be positioned on a horizontal tubular bracket symmetrically at both sides of a telescoping mast. Each H-shaped construction is comprised of a pair of half rods or arms, that are mutually foldable to be readily housed within a powered module of the type as described in patent N. 1292220. The arms are mutually folded intermediately, where a flange, which can be clamped to the tubular bracket by a hand-wheel, is provided. Such a type of arm construction, which is generally shaped as pliers, even if it does not imply particular trouble in its installation, causes waste of time and, at least theoretically, a lowered reliability when in specially heavy operating and load conditions.

Further, the above mentioned embodiments disclosed in the prior patents are susceptible of a limited mass-productiveness.

Thus, an object of the present invention is to assure adequate standards of productiveness and allow a telescoping mast and parts connected thereto, to be installed in a quick, reliable and safe way in a self-powered unit for telecommunications.

Therefore, the invention provides a helitransportable self-powered unit for telecommunications, comprising a container having a vertical rear wall and including inside, under a front cover and in a contracted condition, a telescoping mast able to hold up at least an antenna and to support photovoltaic panels, and also means designed to extend a telescoping mast after its manual installation on the vertical rear wall of the container, the telescoping mast being provided with connecting means to be connected to conjugated connecting means arranged in said vertical rear wall of the container and with supporting means for said photovoltaic panels, said connecting means of the telescoping mast comprising:
- a hooking bottom being designed to be abutted on the lower end of the telescoping mast for the connection thereto and having a front projection provided with hook members facing downward to engage an anchoring rod horizontally fixed in a recess formed in said vertical rear wall of the container, the hooking bottom being provided rear with a handle;
- a locking sleeve designed to be fastened to the telescoping mast at such a height that a locking-sleeve valve having a projecting pressure-containing member is positioned, when the telescoping mast is installed, to match a tapping valve for drawing compressed air through the vertical rear wall of the container, the hooking sleeve being provided rear with a handle and frontally with two articulated fastening members with threaded pins into holes provided in said vertical wall in both side of the tapping valve for drawing compressed air in a cutout thereof;
   and
   said supporting means of said photovoltaic panels comprises a supporting block including two split holes having mutually orthogonal axes, a split hole of which being vertical for fitting and locking the supporting block on the telescoping mast at a desired height, the other split hole being horizontal for fitting thereon facing ends of tubular brackets able to support arms holding the photovoltaic panels, opposite free ends of the supporting block, corresponding to the splits of the split holes, being approachable by fastening means;
   so that the telescoping mast can be removed from the container in its contracted condition and put on the rear vertical wall of the container safely and reliably by one person, and the photovoltaic panels can be readily and reliably mounted thereon.

Conveniently, the unit is made from light as well as strong materials, and other measures are taken that will be evident below.

The present invention is now described, in an illustrative and not limiting way, with reference to a preferred embodiment thereof taken in conjunction with the accompanying drawing, in which:
Figure 1 shows an axonometric view of a helitransportable self-powered unit for telecommunications, having a container, a telescoping mast shown in an extended condition but partially cut off, tubular brackets and photovoltaic-panel holder arms according to the invention, in an installed condition;
Figure 2 shows, in enlarged scale, the container in Figure 1, with parts being removed;
Figure 3 shows a rear view of the container in Figure 1;
Figure 4 is an axonometric view of the telescoping mast in Figure 1, in a contracted condition, showing a hooking bottom, a locking sleeve and a supporting block, all being attached to the telescoping mast;
Figure 5 shows an enlarged top plan view of the hooking bottom in Figure 4;
Figure 6 shows a left-hand side view of the hooking bottom in Figure 5;
Figure 7 shows a cross-sectional view taken along line A-A in Figure 5;
Figure 8 shows a cross-sectional view taken along line B-B in Figure 5;
Figure 9 shows an enlarged top plan view of the locking sleeve in Figure 4;
Figure 10 shows a side view of the locking sleeve in Figure 9;
Figure 11 shows a cross-sectional view taken along line C-C in Figure 9;
Figure 12 shows an enlarged top plan view of the supporting block in Figure 4;
Figure 13 shows a side view of the supporting block in Figure 12;
Figure 14 shows a side view partially cross-sectioned taken along line D-D in Figure 12;
Figure 15 shows an enlarged side view of a rotating pin for quickly clamping a tubular bracket in Figure 1;
Figure 16 shows an enlarged top plan view of a tubular bracket in Figure 1;
Figure 17 shows a rear view of a photovoltaic-panel holder arm in Figure 1; and
Figure 18 shows a longitudinal cross-sectional view of the photovoltaic-panel holder arm in Figure 17.

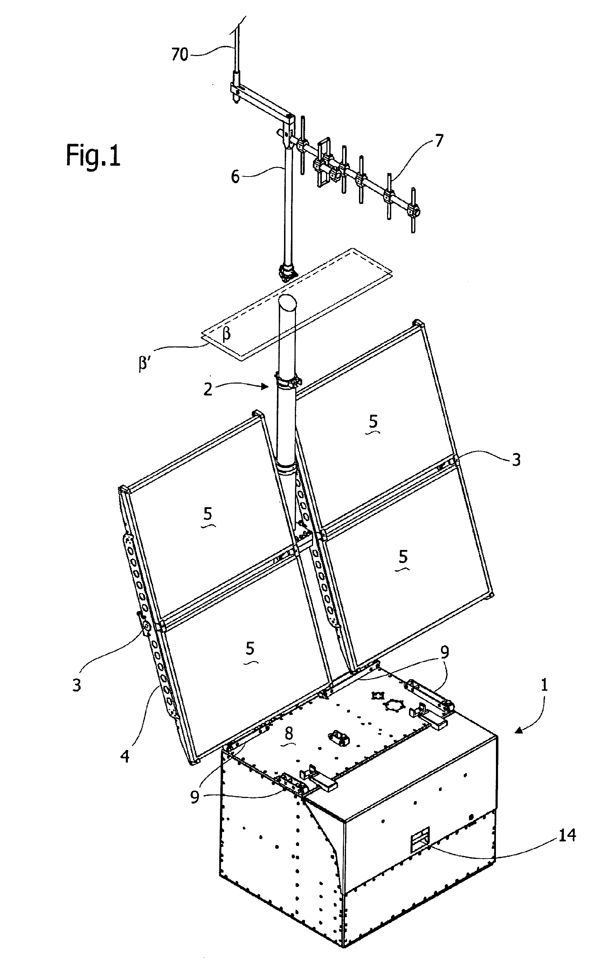

Referring to the drawings, an axonometric view of a helitransportable self-powered unit for telecommunications according to an embodiment of the present invention is shown in Figure 1. The unit is installed and ready to work. In Figure 1 a container or "cabinet" is indicated at 1, a telescoping mast at 2, tubular brackets at 3, and photovoltaic-panel holder arms at 4.

The container 1 has preferably parallelepiped shape, with dimensions and manufacturing material varying according to the unit configuration. In the unit's operating condition, the container 1 acts also as both a support base for extended constructions and a workbench for operators. Further, such a container assures mechanical and environmental protection of internal components and apparatuses. In a transport condition, beside a telecommunication station, an electric accumulation system together with its control electronics, a pneumatic driving system for the extendible parts, and every other specific apparatus necessary for the operation according to the present invention, there are housed within the container 1 the telescoping mast 2 in contracted condition, the tubular brackets 3 and the panel-holder arms 4, as well as photovoltaic panels 5, a tip 6 and antennas 7, 70 (only fragmentarily shown).

Provided on an upper wall 8 are four peripheral hitching points or eyebolts generally indicated at 9, which are located and made in such a way that they can be adjusted in view of the location of the centre of gravity, which changes according to the unit configuration, in order to assure in any case a balanced lifting of the unit when it is transported hung externally from an aircraft.

The peripheral eyebolts 9 are self-centring and articulated on manual jacks for levelling the container, jacks that are advantageously safe hitching points for the load made up of the container 1 and of its contents. The jacks, which are neither indicated in figures or shown in detail, are composed of a prismatic link that is fully obtained by chip-forming machining, suitably grooved and bored at its ends, and of a double coaxial screw-extendable rod is displaced inside the prismatic link. These jacks are conveniently located in peripheral positions of the container 1, in order to level steadily the unit before assembling the extended constructions and allow circular plates (not shown) to be positioned comfortably and safely to the jack feet for distributing the load on the ground.

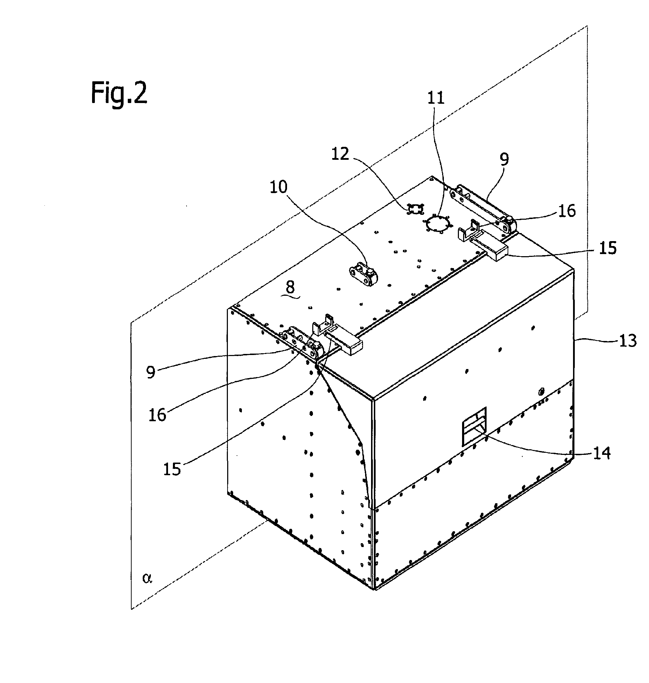

Referring also to Figure 2 showing, in enlarged scale, the container 1 of the unit according to the present invention which is cut off by a vertical plane α, a central eyebolt 10, suitable for the connection to terrestrial lifting means for handling the container 1 on the ground, is provided on its upper wall 8.

In rest position the eyebolts 9, 10 are suitably restrained to the upper wall of the container by clamping means or clips. Further, on the upper wall 8 of the container 1 there are a compass 11 and a water level 12.

A front-upper part of the container 1 can be opened through a cover 13 to constitute a work post for the operators. The cover 13, which is provided with a handle 14, is pivoted about a pair of hinges 15 located on the upper wall 8 of the container 1. This cover can be fastened in two different safe positions. The hinges 15 rotate 180 degrees and, in a maximum opening position, can be easily locked from the front part of the container, by means of a rotating retainer thereof (that may not be seen in the figures) to enter grooves formed on inverted U-shaped members 16. The closure of the container is bad weather proof. Even if not shown, the telescoping mast 2 in its contracted position, the tubular brackets 3 and the panel-holder arms 4, as well as the photovoltaic panels 5, the tip 6 and the antennas 7, 70 are located under the cover 13, all suitably fixed.

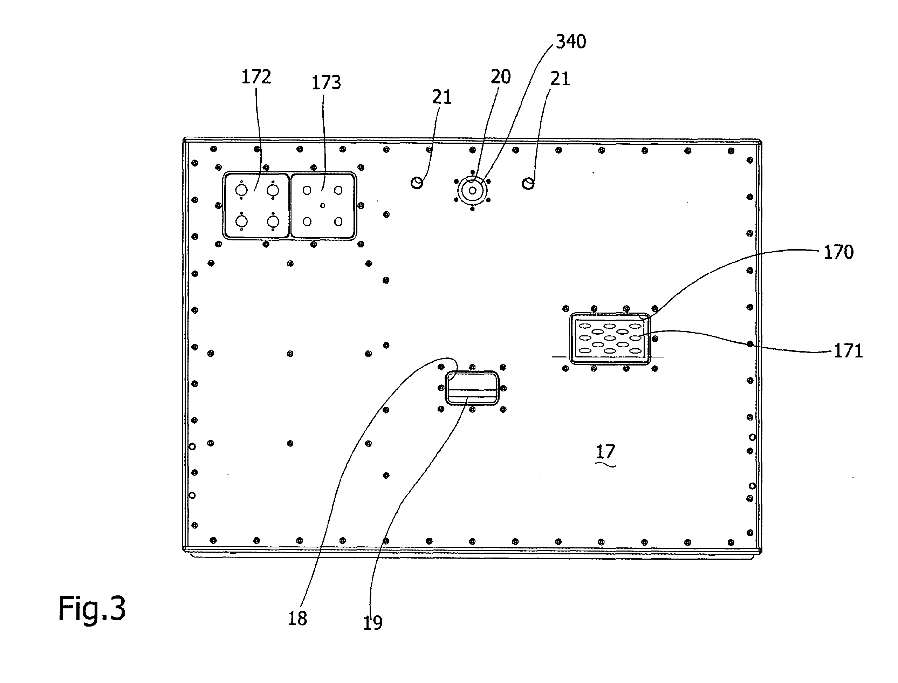

Referring to Figure 3, showing a rear view of the container 1, a rear wall thereof is indicated at 17. In the rear wall 17, particularly important for the present invention is a recess 18, which is provided substantially in a central position and inside which an anchoring rod 19 is horizontally fixed, and, above the recess 18, a cut-out 20 for a tapping valve 340 for drawing compressed air. On both side of the cut-out 20 there is an anchoring hole 21. The above cited parts act as connecting means, as it will clearer from the following of the description. Further, provided in the wall 17 are a space 170 and a turning footrest 171, which is shown in its rest position inside the space 170, and further a plurality of power plugs 172 for the photovoltaic panels and a plurality of antenna connectors 173.

In order to allow the unit to be handled safely and reliably, provided in the lower wall of the container 1 is a known insulating system, made up of antishock devices and vibration-damping wire devices (neither shown in figures, or indicated in detail), suitable to protect the unit in case of accidental impacts.

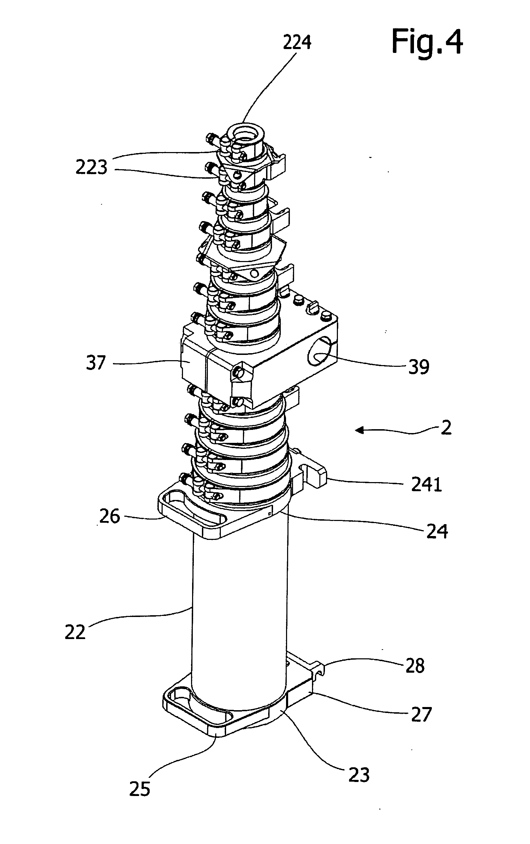

Reference is made now to Figure 4, that is an axonometric view of the telescoping mast 2 in its contracted condition. The telescoping mast 2 has an external mast section 22, i.e. the lowest one, and a multiplicity of mast sections, being of diameters decreasing upward so that each upper mast section can slide into a lower one. Between a mast section and the subsequent one a seal for the compressed air is created by a hose clamp indicated generally at 223. An end of the telescoping mast 2 opposite to the external mast section 22 is indicated at 224.

The lowest mast section 22 has a hooking bottom 23, which is applied in its lower part, and a locking sleeve 24 in its upper part. Both the hooking bottom 23 and the locking sleeve 24 have rear gripping means for the operator in the form of handles denoted as 25 and 26, respectively, as well as connecting means designed to engage correspondent connecting means provided in the rear vertical wall 17 of the container, as above mentioned.

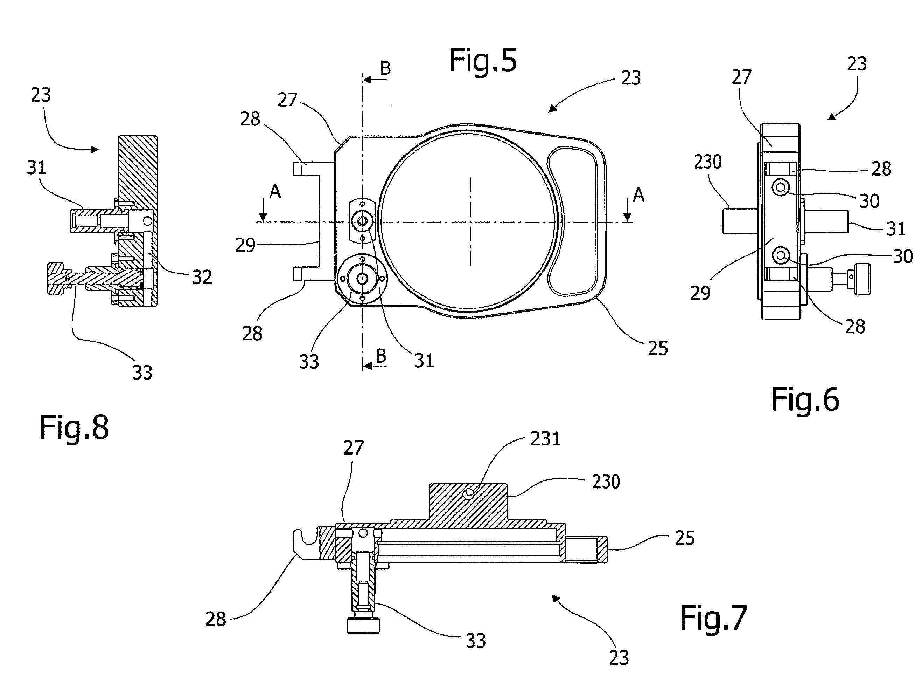

In particular, the hooking bottom 23 is shown in detail in Figures 5 to 8, which are an enlarged top plan view and a left-hand side view of the hooking bottom respectively, and cross-sectional views taken along lines A-A and B-B in Figure 5, respectively.

Since the telescoping mast 2 has to be anchored to the rear vertical wall 17 of the container 1, parts thereof facing the rear wall 17 of the container 1 are defined as front parts, and opposite parts of telescoping mast as rear parts.

Therefore, the hooking bottom 23, which is designed to be attached to the low end of the telescoping mast 2 has a front projection 27. The front projection 27 is provided with connecting means for the connection to the rear vertical wall 17 of the container 1 in the form of a pair of hook members 28 facing downward. The pair of hook members 28 is suitably one-piece with a bar 29, which is fastened by screws 30 to the front projection 27 of the hooking bottom 23. The pair of hook members 28, in the installation of the telescoping pole 2 onto the container 1, engages the anchoring rod 19, which is fixed horizontally in the recess 18 formed in the rear vertical wall 17 of the container 1 (Figure 3).

The hooking bottom 23 has in its front projection 27 a pipe fitting 31 for a compressed-air piping system (not shown), as it will be explained below. The pipe fitting 31 branches off toward the bottom of the lowest mast section 22 and also outside in the environment through a duct 32. The duct 32 can be closed by a cock 33, in order to prevent the compressed air pressure, which is generated by a compressor inside the unit, to be lowered, or the duct. 32 can be opened to cause the exit of the air inside the telescoping mast, so that the telescoping mast is reduced in its height.

As shown in Figure 7, the hooking bottom 23 is provided in its external lower part with a rest protrusion 230 designed to be housed in a correspondent seat (not shown in detail) in a first side wall, inside the container 1, when the telescoping mast 2 is in its contracted condition. Provided in the rest protrusion 230 is a through hole 231 adapted to match a through hole correspondingly provided in said seat, so that the rest protrusion 230, and then the hooking bottom 23 of the telescoping mast can be crossed by a locking pin (not shown). Obviously, provided in a second side wall, opposite to the first one, of the container is at least a supporting member (not shown) for an end 224, which is opposite to the hooking bottom 23, of the telescoping mast.

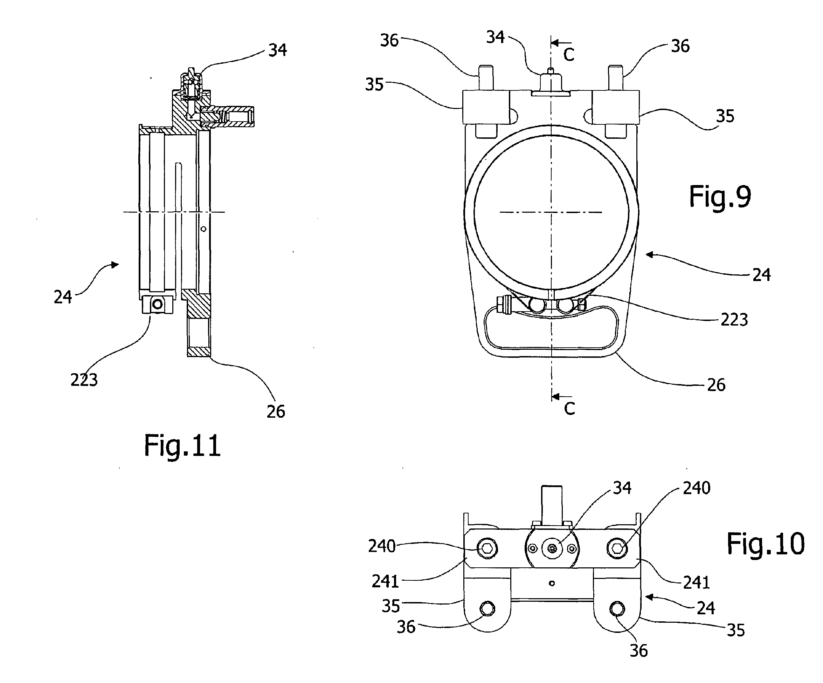

Reference is made now to Figures 9 to 11, which show an enlarged top plan view and a side view of the locking sleeve 24, and a cross-sectional view taken along a line C-C, respectively.

The locking sleeve 24, adapted to lock the telescoping mast 2 to the rear wall 17 of the container 1, is provided, together with a hose clamp 223, in the upper end of the lowest mast section 22, however at a such a height that a locking-sleeve valve 34, having a projecting pressure-containing member, is positioned in correspondence with a swinging tapping valve 340, of known type, which is located inside the cut-out 20 for drawing compressed air through the rear vertical wall 17 of the container 1 (Figure 3).

Frontally, the locking sleeve 24 has two articulated fixing members 35, not shown in Figure 4. The articulated fixing members 35 are pivoted about bolts 240 which are screwed on fork portions 241 of the locking sleeve 24. The articulated fixing members 35 support at right angles threaded pins 36, which are retained therein by their anti-thread ends. The threaded pins 36 are designed to be fit and screwed into correspondent anchoring holes 21 which are provided in the rear wall 17 on both side of the tapping valve 340 for drawing compressed air as above said.

After the telescoping mast 2 in its contracted condition is put with its hooking bottom 23 on the anchoring rod 19, and the locking sleeve 24 is connected to the anchoring holes 21 by means of the threaded pins 36 of the articulated swinging fixing members 35, compressed air, that is generated by the above mentioned compressor, can be guided through the valve 34, with projecting pressure-containing member, of the locking sleeve 24 and a piping (not depicted), which connects the valve 34, with projecting pressure-containing member, of the locking sleeve 24 to the pipe fitting 31 of the hooking bottom 23, for an extending operation of the telescoping mast 2. The telescoping mast 2 can be extended as shown in Figure 1, even if fragmentarily sectioned by planes β, β'. The operating way of the cock for extending or contracting the telescoping mast will not be described as it is well known in the art.

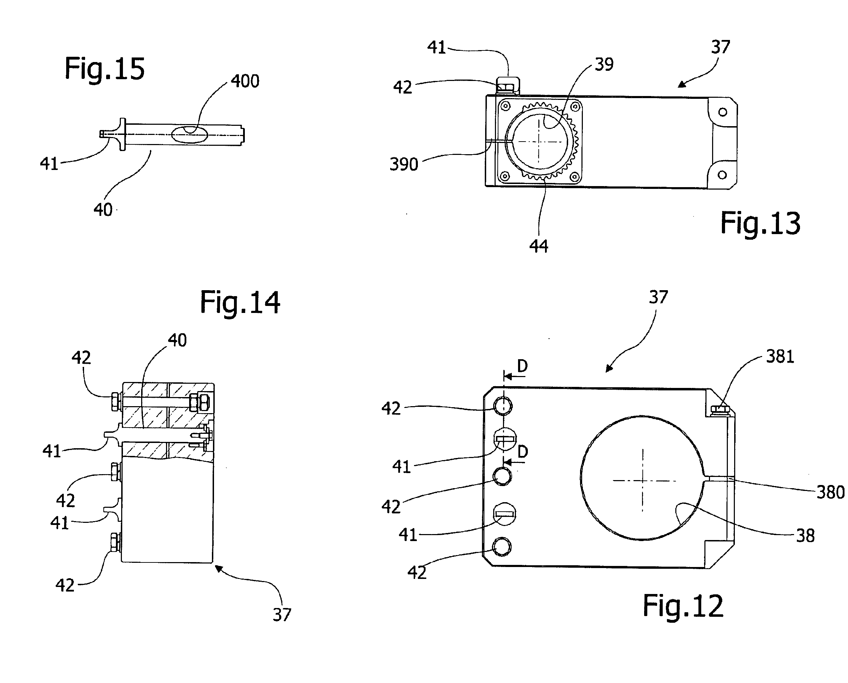

Reference is made now to Figures 12 to 14, which are an enlarged top plan view and a side view of a supporting block 37, as well as a cross-sectioned view taken along a line D-D, respectively. The supporting block 37 of the photovoltaic panels 5 includes two split holes 38, 39 having mutually orthogonal axes. The split hole 38, having a split 380, is vertical to allow the supporting block 37 to be fit and locked on the telescoping mast 2 at the desired height by a bolt 381. The choice of the height is based on dimensions of the photovoltaic panels 5 that the telescoping mast 2 has to support.

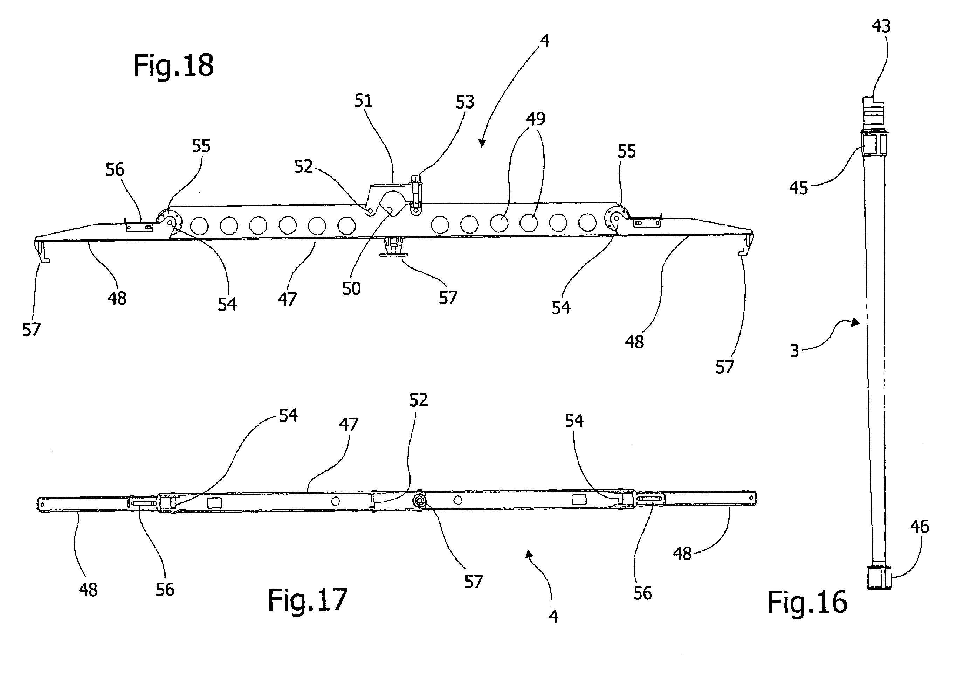

The other split hole 39 is horizontal and serves for quickly fitting facing ends of tubular brackets 3, one of which is shown in Figure 16 as an enlarged top plan view thereof. Opposite free ends of the supporting block 37, which are corresponding to the split 390 of the horizontal hole 39, comprise clamping pins 40 with handle 41, beside common bolts 42.

Further, as shown in Figure 13, the horizontal split hole 39 of the supporting block 37 for fitting an end 43 of a tubular bracket 3 (Figure 16) has a bored plate 44, whose hole is peripherally toothed at least partially.

As shown in detail in Figure 15, which is a side view of a clamping pin 40, the clamping pin 40 is provided with a reduction 400 that is so shaped to allow a tubular bracket end 43 to pass through the horizontal hole 39. The clamping pin 40 is rotated by acting manually on the handle 41 against a spring-back applied in a known way by an elastic counteracting washer, which is mounted on the clamping pin 40 in its end opposite to the handle 41 (Figure 14).

Referring again to Figure 13, the bored plate 44 is able to engage a conjugated toothed profile that is provided in the opposite ends 43 of tubular brackets 3, so that an arrangement with varying orientation of the tubular brackets 3 and, as consequence, of photovoltaic-panel holder arms 4 and of photovoltaic panels 5 on the telescoping mast 2, is feasible.

To this purpose, the tubular brackets 3 have adjacent the respective end 43 and at the free opposite end thereto a retaining cylindrical section 45, 46 having protrusions to retain the photovoltaic-panel holder arms 4.

The photovoltaic-panel holder arms 4 are shown in Figures 17 and 18, that are a rear view and a longitudinal cross-sectional view thereof, respectively. The photovoltaic-panel holder arms 4 comprise an elongated body 47 and a pair of small arms 48, 48, which are pivoted at the respective ends of the elongated body 47. The small arms 48, 48 are pivoted so to swing inside the photovoltaic-panel holder arms from an opened position shown in Figures 17 and 18, in which each small arm 48 is aligned with the elongated body 47 outward, to an opposed closed position. In this closed position, not shown in the figures but easily evident, each small arm 48 is folded on the elongated body 47 so to reduce the overall dimensions of the photovoltaic-panel holder arms 4 in a rest position inside the container 1. Preferably, the elongated body 47 of the panel holder arms 4 is made from a channel that is preferably lightened by through holes generally indicated at 49.

The elongated body 47 has intermediately a triangular cutout 50 and a jaw 51, which is mounted rotatably to face the cutout 50. As shown in the sectional view of Figure 18, the jaw 51 is pivoted in a hinge 52 and has a closure bolt 53. In this way a tie retaining the photovoltaic-panel holder arm to the tubular brackets 3 in the circular retaining section 45, 46 thereof.

The small arms 48, 48, which are pivoted at the ends of the elongated body 47, are articulated about a pivot 54 at the ends of the elongated body 47. The pivot 54 is defined at its ends by a disk 55 provided with at least two peripheral notches, the one being a closing notch and the other an opening notch. Provided on the small arms 48, 48 is a spring latch 56 engaging either notch in the opened position and the closed position, alternatively, of the small arms.

Both the small arms 48, 48 at their ends, and the elogated body 47 intermediately, opposite to said tie, are provided with a retaining hook element 57 of an edge of the photovoltaic panels 5.

By virtue of the components and arrangements above described and depicted in the figures in a preferred embodiment, the telescoping mast 2 can be removed from the container 1 in its contracted condition and put on the rear vertical wall 17 of the container 1 quickly by one person, and the photovoltaic panels 5 can be readily mounted thereon, after elongating the panel-holder arms 4 by rotating the small arms 48 from the elongated body 47 and fixing each panel-holder arm 4 symmetrically and oppositely to the telescoping mast 2 by means of relevant ties. Inversely, the telescoping mast 2 can be uninstalled and put into the container 1. Therein, preferably under the cover 13, four panel holder arm 4 are stacked, placed side by side to the tip 6 and the antennas 7, 70, the telescoping mast 2 in turn being over them in its contracted condition.

The four photovoltaic panels 5 are positioned side by side being separated by a protection baffle.

Quickness, safety and reliability are assured both in both storing and installing the telescoping mast and parts co-operating therewith by connecting and supporting means provided on the telescoping mast and on the parts co-operating therewith, which has been described in a preferred embodiment, to which changes and modifications can be made without departing from the protecting scope of the invention.

## Claims

1. A helitransportable self-powered unit for telecommunications, comprising a container or cabinet (1) having a vertical rear wall (17) and including inside, under a front cover (13) and in a contracted condition, a telescoping mast (2) able to hold up at least an antenna (7, 70) and to support photovoltaic panels (5), and also means designed to extend a telescoping mast (2) after its manual installation on the vertical rear wall (17) of the container (1), the telescoping mast (2) being provided with connecting means to be connected to conjugated connecting means arranged in said vertical rear wall (17) of the container (1) and with supporting means for said photovoltaic panels (5), **characterised in that**
said connecting means of the telescoping mast (2) comprises:
- a hooking bottom (23) being designed to be abutted on the lower end of the telescoping mast (2) for the connection thereto and having a front projection (27) provided with hook members (28) facing downward to engage an anchoring rod (19) horizontally fixed in a recess (18) formed in said vertical rear wall (17) of the container (1), the hooking bottom (23) being provided rear with a handle (25);
- a locking sleeve (24) designed to be fastened to the telescoping mast (2) at such a height that a locking-sleeve valve (34) having a projecting pressure-containing member is positioned, when the telescoping mast is installed, to match a tapping valve (340) for drawing compressed air through the vertical rear wall of the container, the hooking sleeve being provided rear with a handle (26) and frontally with two articulated fastening members (35, 35) with threaded pins (36, 36) into holes (21, 21) provided in said vertical wall (17) in both side of the tapping valve (340) for drawing compressed air in a cutout (20) thereof;
and
said supporting means of said photovoltaic panels (5) comprises a supporting block (37) including two split holes (38, 39) having mutually orthogonal axes, a split hole (38) of which being vertical for fitting and locking the supporting block (37) on the telescoping mast (2) at a desired height, the other split hole (39) being horizontal for fitting thereon facing ends (43, 43) of tubular brackets (3) able to support arms (4) holding the photovoltaic panels (5), opposite free ends of the supporting block, corresponding to the splits of the split holes (38, 39), being approachable by fastening means;
so that the telescoping mast (2) can be removed from the container (1) in its contracted condition and put on the rear vertical wall (17) of the container (1) safely and reliably by one person, and the photovoltaic panels (5) can be readily and reliably mounted thereon.

2. The unit according to claim 1, **characterised in that** said hooking bottom (23) has on said its front projection (27) a pipe fitting (31) for a compressed air piping from said tapping valve (340) through said locking sleeve (24) and in communication with a part of the hooking bottom (23) that faces the lower end of the telescoping mast (2), said pipe fitting (31) branching off further outward to the enviroment with a duct (32), which can be closed by means of a cock (33).

3. The unit according to any one of claims 1 and 2, **characterised in that** said hooking bottom (23) is provided in its external lower part with a bored rest protrusion (230) designed to be received in a corresponding bored seat in a first wall inside the container (1) and stopped therein by a pin, when the telescoping mast (2) is in its contracted condition, an end (224) of the telescoping mast (2), opposite to the hooking bottom (23) resting on a second wall, facing said first wall, of the container (1).

4. The unit according to claim 1, **characterised in that** said locking sleeve (24) is provided with a hose clamp (223) so that it is locked in position on the telescoping mast (2).

5. The unit according to claim 1, **characterised in that** said valve (34), with projecting pressure-containing member, of the locking sleeve (24) is connected to said compressed-air piping in connection with said hooking bottom (23).

6. The unit according to claim 1, **characterised in that** said two articulated fastening members (35, 35) are manually snap movable between a rest position along a direction parallel to the axis of the telescoping mast (2) and an operating position that is rotated at right angles outward, in which the fixing pins (36, 36) can be screwed in said holes (21, 21).

7. The unit according to claim 1, **characterised in that** said fixing means on the opposite free ends of said supporting block (37) corresponding to the split of the split bores (38, 39) comprises fixing means (40) with a handle (41).

8. The unit according to claim 1, **characterised in that** the horizontal split bore (39) of said supporting block (37) for fitting facing ends (43, 43) of tubular brackets (3) has a bored plate (44) having an at least partially peripherally toothed hole, adapted to engage a conjugated toothed profile made in said facing ends (43, 43) of tubular brackets (3) able to support arms (4) holding photovoltaic panels (5), so that said tubular brackets (3), and, as a consequence, said photovoltaic-panels holder arms (4) and said photovoltaic panels (5), can be positioned with a varying orientation.

9. The unit according to any one of claims 1 and 8, **characterised in that** said tubular brackets (3) have adjacent the respective one of their facing ends (43, 43) and at the free end opposite thereto a cylindrical retaining section (45, 46) having protrusions for the photovoltaic-panel holder arms (4).

10. The unit according to any one of claims 1 and 9, **characterised in that** photovoltaic-panel holder arms (4) comprise an elongated body (47) and a pair of small arms (48, 48) pivoted to respective ends of the elongated body (47) so to swing inside said photovoltaic-panel holder arms (4) from an opened position, in which the small arm (48) is aligned with the elongated body (47) outward, to an opposite closed position, in which the small arm (48) is folded onto the elongated body (47) so to reduce the overall dimensions of the photovoltaic-panel holder arms (4) in a rest position inside the container (1).

11. The unit according to claim 10, **characterised in that** said elongated body (47) of the photovoltaic-panel holder arms (4) is made from a channel.

12. The unit according to claim 11, **characterised in that** said channel of the elongated body (47) has wings that are lightened by through holes (49).

13. The unit according to any one of claims 10 to 12, **characterised in that** said elongated body (47) has intermediately a triangular cutout (50) and a jaw (51) pivotally mounted to face said cutout (50) in order to create a tie retaining a photovoltaic-panel holder arm to said tubular brackets (3) in said circular retaining section (45, 46) thereof.

14. The unit according to claim 10, **characterised in that** said small arms (48, 48) pivoted to the ends of the elongated body (47) are articulated about a pin (54) at the ends of the elongated body (47), said pin (54) being defined by a disk (55) provided with at least two peripheral notches, the one being a closing notch and the other an opening notch, and on each of said small arms (48, 48) there is provided a spring latch (56) engaging either notch of the disk (55) in the opened position and in the closed position, alternatively, of the small arms (48,48).

15. The unit according to claim 10, **characterised in that** said small arms (48, 48) are provided in their free ends with a retaining hook element (57) of an edge of photovoltaic panels (5).

16. The unit according to claim 13, **characterised in that** said elogated body (47) has intermediately, opposite to said tie, retaining hook element (57) of an edge of photovoltaic panels (5).
